(19) **Europäisches Patentamt**

**European Patent Office**

**Office européen des brevets**

(11) **EP 0 645 697 B1**

(12) **EUROPEAN PATENT SPECIFICATION**

(45) Date of publication and mention
of the grant of the patent:
**15.01.2003   Bulletin 2003/03**

(51) Int Cl.⁷: **G06F 7/24**

(21) Application number: **94307065.6**

(22) Date of filing: **28.09.1994**

(54) **Minimum shift data arranging method and apparatus**

Minimale Verschiebung von Datenarrangierverfahren und Gerät

Appareil et méthode à positionner des données par décalage minimal

(84) Designated Contracting States:
**DE FR GB**

(30) Priority: **28.09.1993   JP 26440193**

(43) Date of publication of application:
**29.03.1995   Bulletin 1995/13**

(73) Proprietor: **NEC CORPORATION**
**Tokyo (JP)**

(72) Inventors:
  • **Hayata, Toshihiro**
    **Minato-ku, Tokyo (JP)**
  • **Miyano, Toshiki**
    **Minato-ku, Tokyo (JP)**
  • **Serizawa, Masahiro**
    **Minato-ku, Tokyo (JP)**

(74) Representative: **Moir, Michael Christopher et al**
**Mathys & Squire**
**100 Gray's Inn Road**
**London WC1X 8AL (GB)**

(56) References cited:
**EP-A- 0 065 114**          **US-A- 3 611 316**
**US-A- 5 117 495**

**Description**

BACKGROUND OF THE INVENTION

Field of the Invention

The present invention relates generally to code-excited speech coders, and more specifically to a technique for selecting data of significant values and arranging the data with a minimum of shifts. The present invention is particularly useful for the codebook searching process of the speech coders.

Description of the Related Art

As disclosed in international application WO 89/06419, a VSELP (vector sum excited linear predictive) speech coder includes a codebook search controller and a pair of identical subsystems each comprising a basis vector memory and a codebook generator. The codebook searching technique employed in the VSELP speech coder derives cross correlation vectors between speech samples and codewords and auto correlation vectors between successive pairs of the codewords from one of the subsystems of the VSELP. The computed vectors are compared with each other using the cross multiplication technique and those having significant values are selected as a first set of candidate vectors. A second set of computed vectors is derived from the second subsystem and those having significant values are selected as a second set of candidate vectors. The codebook search controller uses a technique called combination search to select a pair of optimum vectors from the first and second sets of candidate vectors and applies the vectors to the codebook generators. In the selection process, the computed vectors are stored in a buffer and arranged in a sequential order according to their values. This is done by repeatedly shifting the stored vectors to vacate a position for a subsequent vector having a higher value.

However, the amount of data stored in the buffer is substantial and the shifting of data to lower ranking positions increases computational complexity, particularly when a position is to be vacated for a highest value. Thus, the time taken to select a set of vectors is long, and a need exists to reduce the amount of time involved with the selecting process.

United States Patent 3,611,316 (Woodrum), granted to International Business Machines in 1971, describes in lines 6 to 26 of column 1 a sorting method in which a table of sequenced addresses is generated. The insertion sorting operation sorts each newly-received data key by comparing the new key with the keys currently represented by the addresses in the table; a binary search is made of the keys using their order in the address table. When the binary search is ended, the position for inserting a new key into the address table is found. Then all addresses in the table before the found position are moved by one address location in order to make room for insertion of the new record address.

SUMMARY OF THE INVENTION

Accordingly, an object of the present invention is to provide a technique for producing a sequence of selected data according to their ranks in as short a period of time as possible.

In accordance with the present invention, N data items are sequentially received, and stored in respective storage locations of a first memory according to the order of arrival. The ranks of the N data items are determined according to their relative values to each other. Corresponding to the stored data items, the address number of the first memory storage locations of the corresponding data items are stored in respective storage locations of a second memory according to their ranks. The storage locations of the second memory are arranged in sequential order of ranks so that the first memory address numbers are sequentially arranged in the second memory in the order of the ranks of the corresponding data items. An additional data item is received and its rank is determined relative to the values of the N data items stored in the first memory. If the rank of the additional data item is determined to be higher than the lowest rank of the stored data items, the additional data item is used to overwrite the lowest rank data item. The first memory address number of the additional data item is stored in one of the storage locations of the second memory according to the rank of the additional item by moving existing address numbers and discarding the address number of the overwritten data item. A sequence of such additional data items is received and the process is repeated until a predetermined number of data items are received. The address numbers stored in the second memory are sequentially read, starting from the highest rank storage location, and the contents of the first memory are read in response to the sequentially read address numbers of the second memory to produce a data sequence. In the second memory the storage locations are connected to form a ring.

Also in accordance with the present invention, the rank of each of the N data items is determined relative to a threshold value, which is equal to the number of data items stored in the first memory, divided by two. If the rank of the data item is determined to be higher than the threshold value, those first memory indices that are stored in said second memory in a position corresponding to the rank of the data item or to higher ranks are each rotated by one position in a first direction on the ring, a location corresponding to the rank of the data item being thereby vacated and the first memory index of the data item being stored in that vacated location. If the rank of the data item is determined to be lower than the threshold value, those first memory indices that are stored in said second memory either in a next-lower ranking position to the rank of the data item or in positions ranking lower than the next-lower ranking position are each rotated by one position in a second direction on the ring, a location corresponding to the next-lower ranking position being thereby vacated and the first memory index of the data item being stored in that vacated location.

BRIEF DESCRIPTION OF THE DRAWINGS

The present invention will be described in further detail with reference to the accompanying drawings, in which:

Fig. 1 is a block diagram of a prior art VSELP speech coder;
Fig. 2 is a flowchart illustrating the sequence of operations performed by a prior art controller;
Fig. 3 is a block diagram of a portion of a VSELP speech coder embodying the present invention;
Figs. 4A and 4B are flowcharts illustrating a sequence of operations performed by the controller of Fig. 3; and
Figs. 5A to 5H are explanatory views useful for describing details of the operation of the present invention.

DETAILED DESCRIPTION

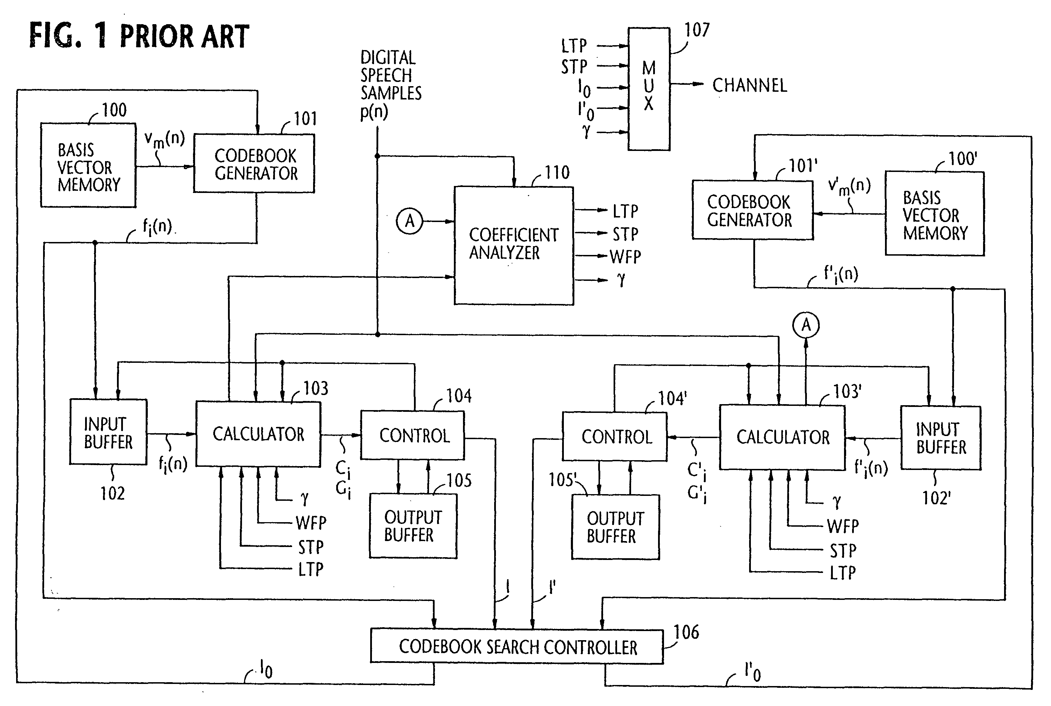

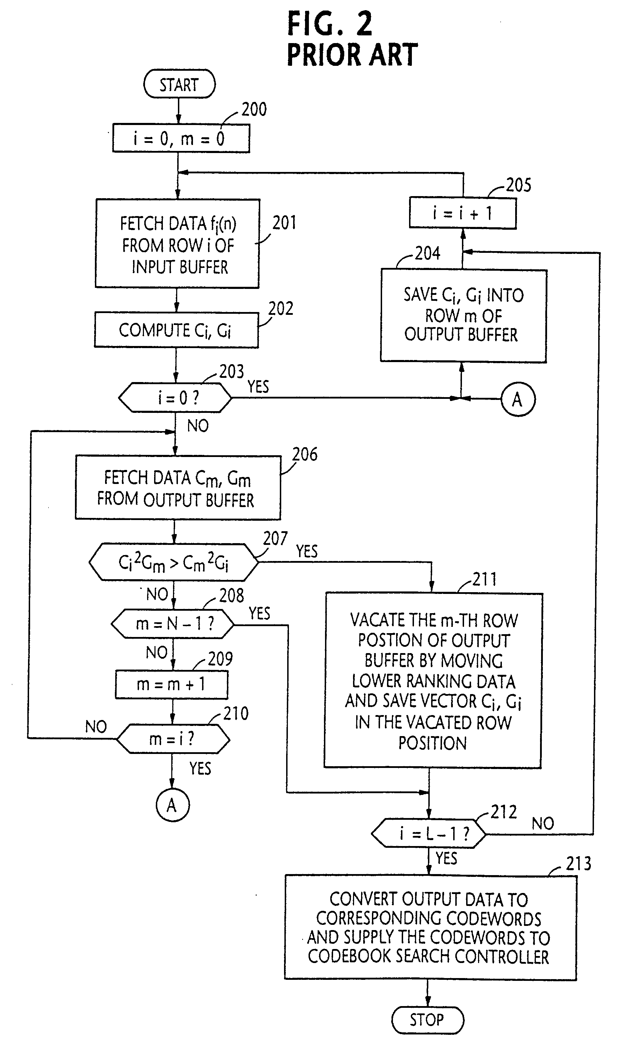

Before proceeding with the detailed description of the present invention, it may prove helpful to provide an explanation of the prior art with reference to Figs. 1 and 2 in which a simplified form of the prior art VSELP speech coder as described in the aforesaid international application WO 89/06419 and a flowchart of a data selection algorithm are illustrated, respectively. For each frame, a series of L digital speech samples $p(n)$ is applied to calculators 103 and 103' and coefficient analyzer 110 where a set of linear predictive coding (LPC) parameters are produced in accordance with prior art techniques, including the long term predictor parameters LTP, short term predictor parameters STP, weighting filter parameters WFP, and excitation gain factor $\gamma$ (where L is typically 40, and $1 \leq n \leq L$). Basis vector memories 100 and 100' respectively contain a set of M basis vectors $v_m(n)$ and a set of M' basis vectors $v'_m(n)$, each comprised of N samples (where $1 \leq m \leq M$ or M', ). The basis vectors $v_m(n)$ and $v'_m(n)$ are used by codebook generators 101 and 101', respectively, to generate a set of $2^M$ pseudo-random excitation vectors $f_i(n)$ and a set of $2^{M'}$ pseudo-random excitation vectors $f'_i(n)$, respectively. Each codebook generator utilizes the basis vectors and an excitation codewords $I_0$ ($I'_0$) to generate the excitation vectors $f_i(n)$ (or $f'_i(n)$). In accordance with the vector sum excitation technique, L excitation vectors are generated by codebook generator 101 and stored into input buffer 102 and L' excitation vectors are generated by codebook generator 101' and stored into input buffer 102'. The stored excitation vectors $f_i(n)$, the input digital samples $p(n)$ and the LPC parameters produced by the coefficient analyzer 110 are used by calculator 103 to compute vectors $C_i$ and $G_i$ which are defined as:

$$C_i = \sum_{n=1}^{L} f_i(n)\, p(n) \qquad\qquad (1)$$

$$G_i = \sum_{n=1}^{L} \{f_i(n)\}^2 \qquad\qquad (2)$$

The codebook searching process of the VSELP speech coder for the calculator 103 is to minimize the error $E_i$ of the form:

$$E_i = \sum_{n=1}^{L} \{p(n) - \gamma f_i(n)\}^2 \qquad\qquad (3)$$

The error $E_i$ is minimized by maximizing the term $C_i^2/G_i$.

In like manner, the stored excitation vectors $f'_i(n)$, the input digital samples $p(n)$ and the LPC parameters are used by calculator 103' to compute vectors C'$_i$ and G'$_i$ which are defined as:

$$C'_i = \sum_{n=1}^{L} f'_i(n)\, p(n) \qquad (1')$$

$$G'_i = \sum_{n=1}^{L} \left\{ f'_i(n) \right\}^2 \qquad (2')$$

The codebook searching process of the speech coder for the calculator 103' is to minimize the error E'$_i$:

$$E'_i = \sum_{n=1}^{L} \left\{ p'(n) - \gamma\, f'_i(n) \right\}^2 \qquad (3')$$

The computed vectors C$_i$ and G$_i$ are supplied to controller 104 where each of the input vectors is compared with N output vectors (where N < L) stored in a corresponding output buffer 105 and is used to update the output buffer if one or more input vectors have a value larger than any of the stored output vectors. Likewise, computed vectors C'$_i$ and G'$_i$ are supplied to controller 104' where each of the input vectors are compared with N' output vectors (where N' < L) stored in a corresponding output buffer 105' and is used to update the output buffer if one or more input vectors have a value larger than any of the stored vectors. The vectors stored in the output buffer 105 are converted to N codewords I by controller 104 and fed to a codebook search controller 106, and those stored in the output buffer 105' are converted to N' codewords I' by controller 104' and fed to the codebook search controller 106.

Codebook search controller 106 utilizes the excitation vectors f$_i$(n), f'$_i$(n) and the codewords I and I' to perform a combination search for a best combination of vectors I$_0$ and I'$_0$. Codebook generators 101 and 101' use the codeword vectors I$_0$ and I'$_0$, respectively, to generate the excitation vectors f$_i$(n) and f'$_i$(n). On the other hand, calculators 103 and 103' produce feedback signals which are used by the coefficient analyzer 110 to optimize the excitation gain $\gamma$.

The operation of the controllers 104 and 104' will be described in accordance with the flowchart of Fig. 2. Since both of these controllers are identical to each other, the description is only concerned with the controller 104 only for simplicity. At the start of a frame, the input row index i and the output row index m are initialized to 0 at step 200. At step 201, a vector f$_i$(n) stored in the input buffer 110 is fetched from a row specified by the index i and supplied to the calculator 103. At step 202, control directs the calculator 103 to compute C$_i$ and G$_i$ according to the equations (1) and (2) using a speech sample p(n) and the fetched input data f$_i$(n).

At step 203, the input row index i is checked for equality to 0 to see if the input row data is the first for the frame. If so, control exits to step 204 to save the calculated row data C$_i$, G$_i$ into the 0-th row of the output buffer 105. Exit then is to step 205 to increment the index i by one and control returns to step 201. In the processes that follow, subsequent input row data f$_i$(n) are fetched from the input buffer and calculated. Control branches at step 203 to step 206 to fetch previous data C$_m$, G$_m$ stored in the output buffer 105 from a row specified by the output row index m.

Once C$_i$, G$_i$, C$_m$ and G$_m$ are obtained, then C$_i^2$/G$_i$ must be compared to the previous data C$_m^2$/G$_m$. Since division is inherently slow, it is useful to reformulate the problem to avoid the division by cross multiplication. Since all terms are positive, the comparison is equivalent to comparing C$_i^2$ x G$_m$ to C$_m^2$ x G$_i$ as is done in step 207. If the first quantity is smaller than the second quantity, the index m is compared to N - 1 for equality at step 208. If all the output row data are still not tested for the current row data C$_i$, G$_i$, the decision at step 208 is negative and control proceeds to step 209 to increment the index m by one and proceeds to step 210 to determine whether or not the index m is equal to i. If m ≠ i, control returns to step 206 to repeat the testing process. If m = i, control recognizes that the current C$_i^2$ x G$_m$ quantity is smaller than any of the previous quantities, and proceeds to step 204 to save the current data into the m-th row of the output buffer 105. The index i is then incremented (step 205) and control returns to step 201.

If the first quantity is determined to be larger than the second quantity at step 207, control recognizes that it is currently higher than the previous data stored in the m-th and higher numbered row positions, and proceeds to step 211 to vacate the m-th row position of the output buffer by moving the lower ranking output row data currently stored in the m-th and higher numbered row positions and saves the current input row data C$_i$, G$_i$ in the vacated row position. Control then proceeds to decision step 212 to check to see if the index i is equal to L - 1.

When the comparison process is not complete for all input row data, step 212 directs control to exit to step 205 to increment the index i to repeat the testing process. If m becomes equal to N - 1 at step 208, control recognizes that the current value is smaller than any of the previous values and proceeds to step 212, skipping the vacating process at step 211. If i = L - 1, higher values of N row data are selected from L row data and stored in the output buffer 105 in row positions corresponding to their ranks, and control exits to step 213 to convert all the data stored in the output buffer to corresponding codewords and supplies the codewords to the codebook search controller 106.

However, since the amount of data stored in the output buffer is substantial, the shifting of data to lower ranking positions increases computational complexity, particularly when a position is to be vacated for a new highest value. Thus, the time taken to store a set of data in the output buffer is long. A need exists to reduce the processing time.

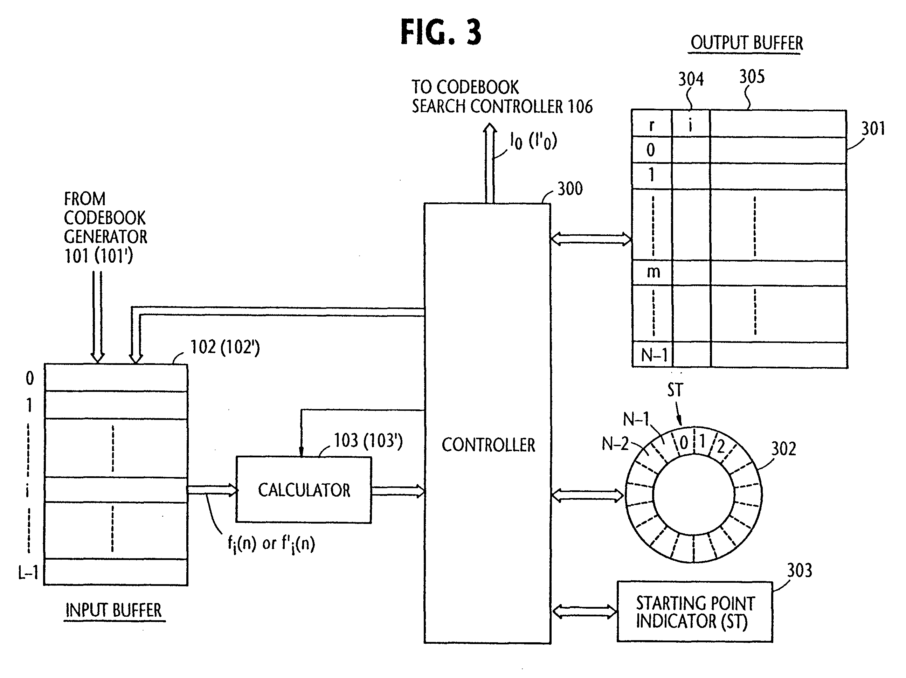

Referring now to Fig. 3, there is shown a portion of the VSELP speech coder embodying the present invention. Controller 300 corresponds to controller 104 of Fig. 1. Controller 300 is associated with an output buffer 301, a ring buffer 302 and a starting point register 303. The output buffer 301 is partitioned columnwise to provide a storage area 304 for storing input row indices i and a data area 305 for storing row data $C_m$, $G_m$ ($0 \leq m \leq N-1$), both areas being subdivided into rows #0 to #(N-1) as in Fig. 1, but identified by a row number r (r=0 to r=N-1). The ring buffer 302 is provided for storing the row number r of the output buffer 301 in a position starting from a position that is indicated by a starting point indicator ST stored in the starting point register 302. The ring buffer 302 has N storage positions starting with #0 to #(N - 1) corresponding in number to the number of rows of the output buffer 301. The position #0 of the ring buffer is used to store the row number of the output buffer having the highest data value. As will be described, the starting position ST is moved one position counterclockwise as it is incremented by one. When this occurs, the ranks of all other positions are moved in the same manner, so that all the ranks of the storage positions of the ring buffer are shifted one position counterclockwise, while maintaining their contents in the same positions. In this way, the row numbers stored in the ring buffer are given different ranks as the starting position is shifted. The row numbers stored in the ring buffer 302 are used address pointers for reading data from the output buffer 301. Since controller 104' is identical to controller 104, a similar set of circuit blocks must be provided.

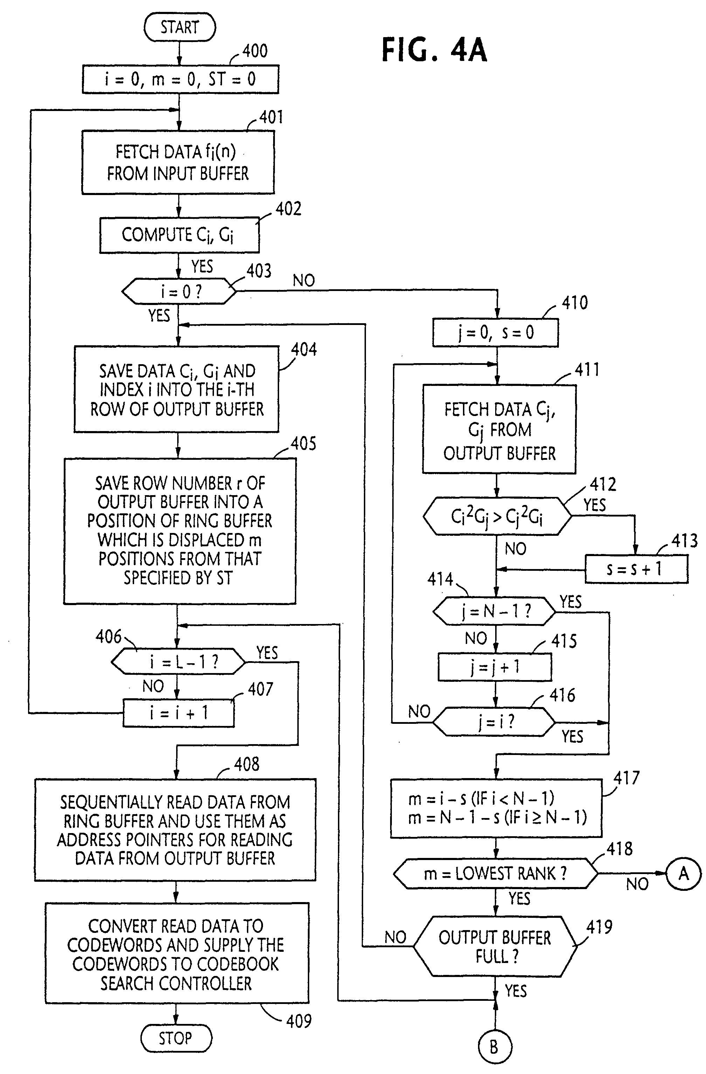

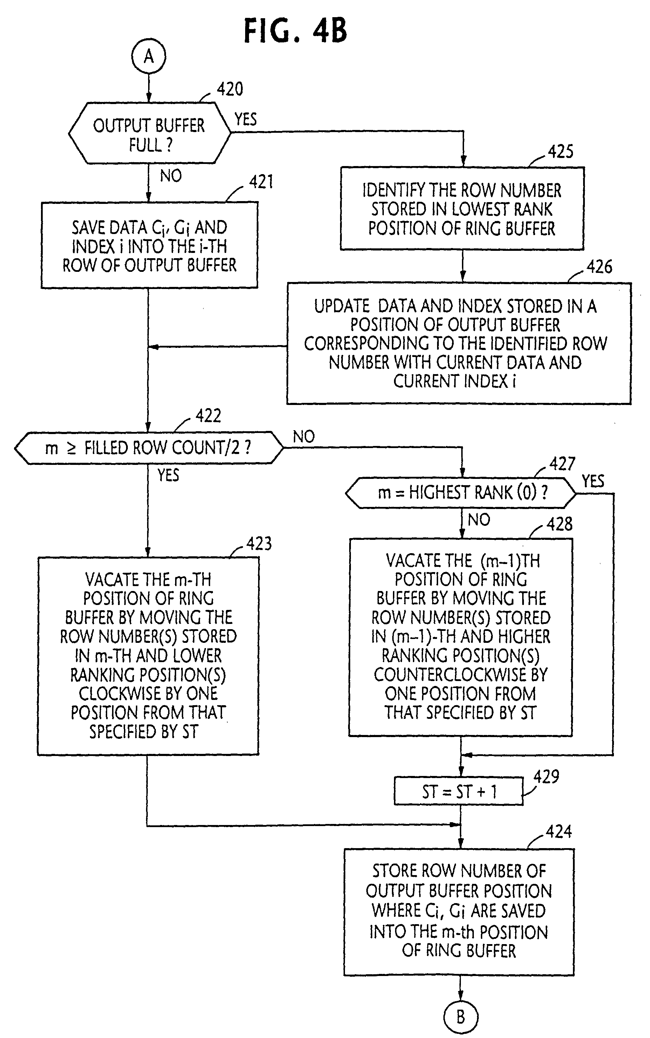

The operation of the controller 300 will now be described in accordance with the flowcharts of Figs. 4A and 4B. At initialization step 400, the input row index i, the output row index m and the starting point indicator ST are set equal to 0. Input row data $f_i(n)$ is then fetched from the i-th row of the input buffer 102 at step 401, and the terms $C_i$ and $G_i$ are computed by the calculator 103 at step 402 in the same manner as step 202 of Fig. 2. If i = 0 (step 403), control exits to step 404 to save the index i and the calculated data $C_i$, $G_i$ in the i-th row of storage locations 304 and 305 of the output buffer 301, respectively. At step 405, the row number r of the output buffer 301 position where the current data was stored at step 404 is saved in a position of the ring buffer 302, which position is displaced by m positions from the starting (highest rank) position specified by the indicator ST. Note that the row number r is equal to the index i until the output buffer becomes full. However, they do not necessarily equal each other once the output buffer is full.

At step 406, the input row index i is compared to the highest row number L - 1 of the input buffer 102 to determine whether or not all input data are calculated and compared. If i is smaller than L - 1, the index i is incremented by one at subsequent step 407 and control returns to step 401.

During each of the subsequent testing processes, subsequent data $C_i$, $G_i$ are computed at step 402 and control branches at step 403 to step 410 to initialize indices j and s to 0. At step 411, stored data $C_j$, $G_j$ are fetched from output buffer 301 and compared to the input row data $C_i$, $G_i$ at step 412 using the cross multiplication technique in the same manner as step 207 of Fig. 2. If the first quantity $C_i^2 G_j$ is greater than the second quantity $C_j^2 G_i$, then the index s is incremented by one at step 413 and the index j is compared to the highest row number N-1 of the output buffer at step 414. If the first quantity is smaller than the second quantity, control branches at step 412 to step 414. If $j \neq N - 1$ (step 414), the index j is incremented at step 415 and compared at subsequent step 416 to the index i. If $j \neq i$ at step 416, control returns to step 411 to repeatedly compare the current row data with previous data stored in subsequent locations of the output buffer 301. If j = N - 1 at step 414 or j = i at step 416, control branches to step 417 to determine the rank of the current data by setting the index m equal to i - s if is i is smaller than N - 1 or N - 1 - s if i is equal to or greater than N - 1. Exit then is to step 418 to determine whether or not the current index m is greater than the m-value of any of the data stored in the ring buffer 302. If so, it indicates that the current data is of the lowest rank, and control proceeds to step 419 to check to see if the output buffer is full or not. If the output buffer is not full, control exits to step 404 to save the index i and the current data into the i-th row of the output buffer 301, which is followed by step 405 where the row number r of these output buffer locations is stored in the ring buffer in a position displaced by m positions from the ST-indicated position. Steps 406 and 407 are then executed and control returns to step 401 if i is still smaller than L - 1. Steps 406 and 407 are also executed if the value of the current data is determined to be of the lowest rank (step 418) once the output buffer is full (step 419).

If the rank m of the current data is determined to be higher than the lowest rank (step 418), control proceeds to step 420, Fig. 4B, to provide an availability check on the output buffer. If the output buffer is not full, control branches at step 420 to step 421 to save the index i and current data $C_i$, $G_i$ in the i-th row of the output buffer 301. At step 422, the index m is compared to one half of the number of rows of the output buffer which are filled.

If m is equal to or greater than half the value of the filled row count, then the m-th position of ring buffer 302 is vacated by moving the row numbers stored in the m-th and lower ranking positions clockwise by one position from the highest rank point indicated by ST in a manner as will be fully described later.

At step subsequent 424, the row number r of the location of the output buffer 301 where the current data $C_i$, $G_i$ was saved at step 421 is stored in the m-th position of the ring buffer 302, and control returns to step 406, Fig. 4A.

If m is determined to be smaller than half the value of the filled row count at step 422, then the index m is checked at step 427 to see if the current data is of the highest rank (i.e., m = 0). If the answer is negative at step 427, control proceeds to step 428 to vacate the (m-1)-th position of the ring buffer by moving one or more row numbers stored in the (m-1)-th and higher ranking positions counterclockwise by one position from the ST-indicated position, and the starting point indicator ST is incremented by one at step 429. Accordingly, the position of the highest rank position of the ring buffer 302 is moved one position counterclockwise, and hence, all the other ranks of the row numbers of ring buffer 302 are lowered by one rank. Since the moving of the m-th and higher positions has shifted the position of the highest rank, the increment of the ST value is to renew the positions of the ranks. At step 424, the position vacated in this way at step 428 is filled with the row number of output buffer 301 position where the current data was saved at step 421.

If m = 0 at step 427, the value of the current data is higher than any of the stored values and the index i and the vacating process at step 428 is skipped and the starting point indicator ST is incremented at step 429.

When the output buffer 301 becomes full, some of the data in the output buffer 301 will be updated with subsequent data if the latter is of higher value than the previously stored data, and so the updated row number r of the ring buffer does not correspond to the index i of the stored row data. When this occurs, control exits step 420 and enters step 425 to identify the row number stored in the lowest rank position of the ring buffer 302. Exit then is to step 426 where the data and index i stored in the locations of the output buffer corresponding to the identified row number are updated with the current data $C_i$, $G_i$ and their index i. Control then moves to step 422.

If m = 0 is detected at step 427 following the execution of step 426 where the current data were used to replace the lowest rank data, the indicator ST is incremented at step 429. Accordingly, at subsequent step 424, the new highest rank position of the ring buffer now corresponds to the old lowest rank position, and in this new highest rank position the row number of the discarded data is still stored. It must be updated with the row number of the current data. However, since they share the same row number of the output buffer, the row number of the newly stored data in the ring buffer remains unchanged.

When all the input data are calculated and compared, the index i becomes equal to L - 1 at step 406, and control exits to step 408 to sequentially read the row numbers stored in the ring buffer and uses them as address pointers for reading the calculated data from the output buffer in the order of descending ranks. At step 409, the read data are converted into corresponding codewords and supplied to the codebook search controller 106.

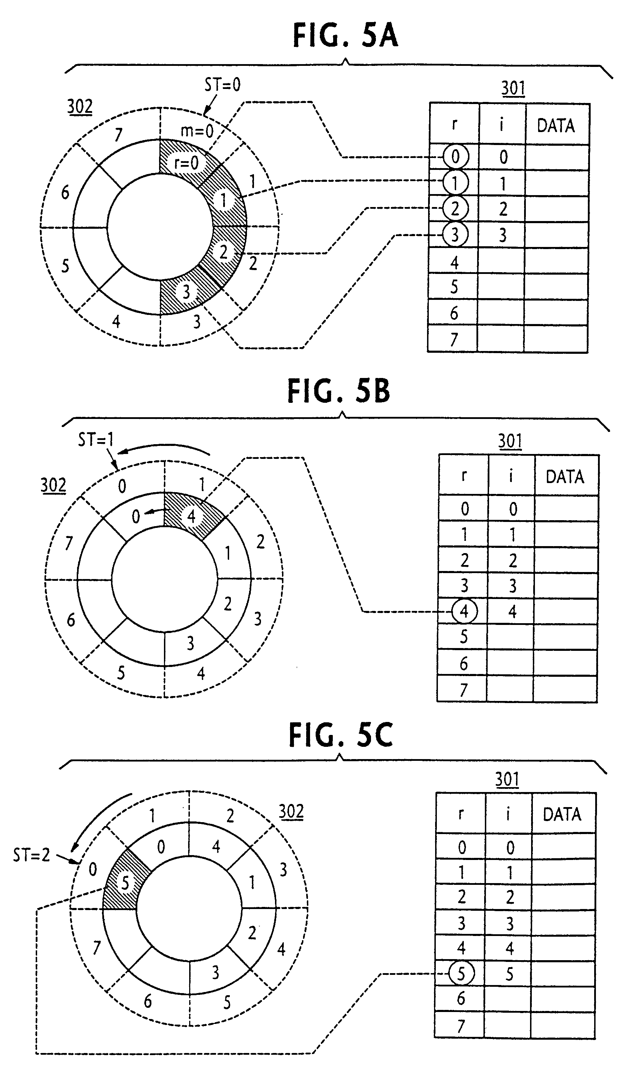

The operation of the present invention will be described in greater detail with reference to Figs. 5A to 5H by assuming that N = 8 and L = 12 (for simplicity) and that a sequence of input data $f_0(n)$ to $f_{11}(n)$ are supplied from the input buffer and a sequence of data $C_0$, $G_0$ to $C_{11}$, $G_{11}$ is calculated.

Initially, at step 400, the indices i and m and starting point indicator are set to 0. The $C_0$, $G_0$ data and their index i=0 are automatically stored in the r=0 position of the output buffer 301 (step 404) and the r=0 row number of the output buffer is stored into the highest rank position (m=0) of ring buffer 302 indicated by the starting point indicator ST=0 (see Fig. 5A).

In response to the next $C_1$, $G_1$ data, indices j and s are set to 0 (step 410) and the stored $C_0$, $G_0$ data are fetched from the output buffer for comparison with $C_1$, $G_1$ (step 412). If $C_1^2 G_0 < C_0^2 G_1$, the index j is incremented to 1 (step 415) and j = i (step 416), control proceeds to step 417 to set the index m equal to 1 - 0 and determines that the current data is of the lowest of the two (step 418). Accordingly, the $C_1$, $G_1$ data and their index i=1 are stored in the r=1 position of the output buffer (step 404) and the r=1 row number of the output buffer is stored in the m=1 position of the ring buffer (step 405) as indicated in Fig. 5A.

In response to the $C_2$, $G_2$ data, indices j and s are set to 0 (step 410) and the $C_0$, $G_0$ data are fetched from the output buffer for comparison with $C_2$, $C_2$ (step 412). If $C_2^2 G_0 < C_0^2 G_2$, the index j is incremented to 1 (step 415) and j ≠ i (step 416), the next $C_1$, $G_1$ data are fetched from the output buffer for comparison with $C_2$, $G_2$. If $C_2^2 G_1 < C_1^2 G_2$, the index j is incremented to 2 (steps 415) and j = i (step 416), the index m is set equal to 2 - 0 (step 417) and the current data is determined to be the lowest of the three (step 418). Accordingly, the $C_2$, $G_2$ data and their index i=2 are stored in the r=2 position of the output buffer (step 404) and the r=2 row number of the output buffer is stored in the m=2 position of the ring buffer (step 405) as indicated in Fig. 5A.

Likewise, in response to the $C_3$, $G_3$ data, indices j and s are set to 0 (step 410) and the $C_0$, $G_0$ data are fetched from the output buffer for comparison with $C_3$, $G_3$. If $C_3^2 G_0 < C_0^2 G_3$, the index j is incremented to 1 (step 415) and j ≠ i (step 416), the next $C_1$, $G_1$ data are fetched from the output buffer *for* comparison with $C_3$, $G_3$. If $C_3^2 G_1 < C_1^2 G_3$, the index j is incremented to 2 (step 415) and j is still not equal to i (step 416), the next $C_2$, $G_2$ data are fetched from the output buffer for comparison with $C_3$, $G_3$. If $C_3^2 G_2 < C_2^2 G_3$, the index j is incremented to 3 (step 415) and j becomes equal to i (step 416), the index m is set equal to 3 - 0 (step 417) and the current data is determined to be the lowest of the four (step 418). Accordingly, the $C_3$, $G_3$ data and their index i=3 are stored in the r=3 position of the output buffer (step 404) and the r=3 row number of the output buffer is stored in the m=3 position of the ring buffer (step 405) as indicated in Fig. 5A.

If the value of the subsequent data $C_4$, $G_4$ is smaller than the value of the stored $C_0$, $G_0$ data, but greater than any of the other data, the index s is incremented to 3 and the index m is set equal to 4 - 3 = 1 (step 417), and the current data is determined to be not the lowest at step 418 and control proceeds to step 420, from which it exits to step 421 to save the data $C_4$, $G_4$ and i = 4 in the r=4 position of the output buffer 301. At subsequent step 422, the index m=1 of the current data is compared to the filled row count which is currently equal to 4/2. Since m < 4/2, the index m is checked to see if it is of the highest rank (m=0) at step 427. Since m ≠ 0, step 427 directs control to proceed to step 428 to vacate the m=0 position of the ring buffer by moving the row number r=0 stored therein counterclockwise by one position. At subsequent steps 429 and 424, the starting point indicator ST is incremented by one to move the highest rank position of the ring buffer counterclockwise, so that the previous m=0 position of the ring buffer corresponds to the new m=1 position, and the row number r=4 is stored in the new m=1 position (Fig. 5B).

If the value of the subsequent data $C_5$, $G_5$ is greater than any of the previous data, the index s is incremented to 5 and the index m is set equal to 0 (step 417). Control moves through steps 418, 420 to step 421 to store $C_5$, $G_5$ and index i=5 in the r=5 position of the output buffer, and proceeds through steps 422 and 427 to step 429 to increment the indicator ST to 2 to shift the highest ranking position of the ring buffer counterclockwise to create a m=0 position. At subsequent step 424, the current row number r=5 of the output buffer is stored in the m=0 position of the ring buffer as illustrated in Fig. 5C.

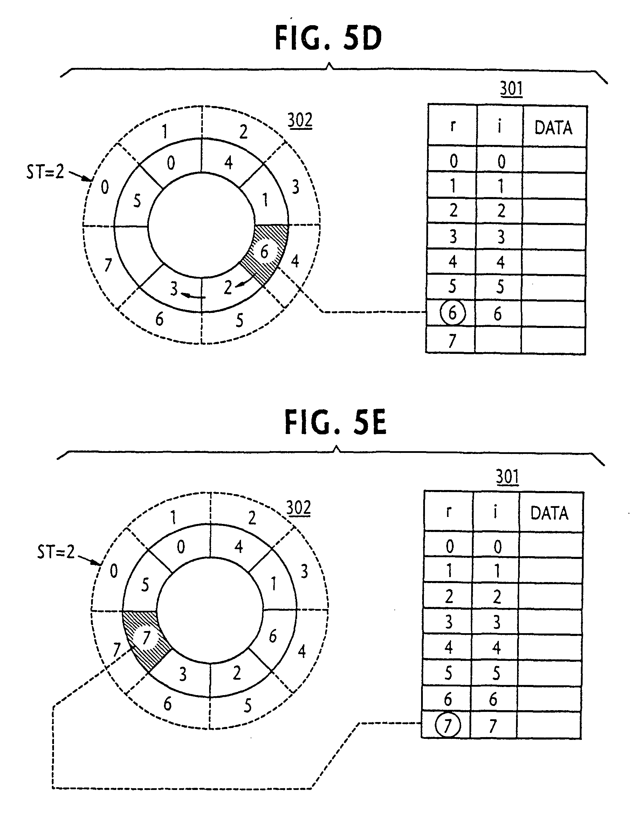

Assuming that the value of the subsequent data $C_6$, $G_6$ is smaller than previous data $C_0$, $G_0$, $C_1$, $G_1$ $C_4$, $G_4$, $C_5$, $G_5$, but larger than $C_2$, $G_2$ and $C_3$, $G_3$, the index s is incremented to 2 so that the index m is set equal to 4 (step 417). Control moves through steps 418, 420 to step 421 to store $C_6$, $G_6$ and the index i=6 in the r=6 position of the output buffer, and proceeds to step 422 where m = 4 is compared to the value 7/2. Since m > 7/2, control branches to step 423 to vacate the m=4 position of the ring buffer by moving the row numbers r=2 and r=3 stored in the m=4 and m=5 positions to the m=5 and m=6 positions, respectively (see Fig. 5D). At subsequent step 424, the row number r=6 of the output buffer is stored in the vacated m=4 position of the ring buffer.

If the value of the subsequent data $C_7$, $G_7$ is smaller than any of the previous data, the index m is set equal to 7 (step 417), and control moves through steps 418, 419 to 404 to store $C_7$, $G_7$ and the index i=7 in the r=7 position of the output buffer, and at subsequent step 405, the row number r=7 of the output buffer is stored in the m=7 position of the ring buffer (see Fig. 5E).

With the output buffer being full, if the value of the subsequent $C_8$, $G_8$ data is smaller than any of the previous data, control exits step 418 and makes an affirmative decision at step 419, and the $C_8$, $G_8$ data is discarded.

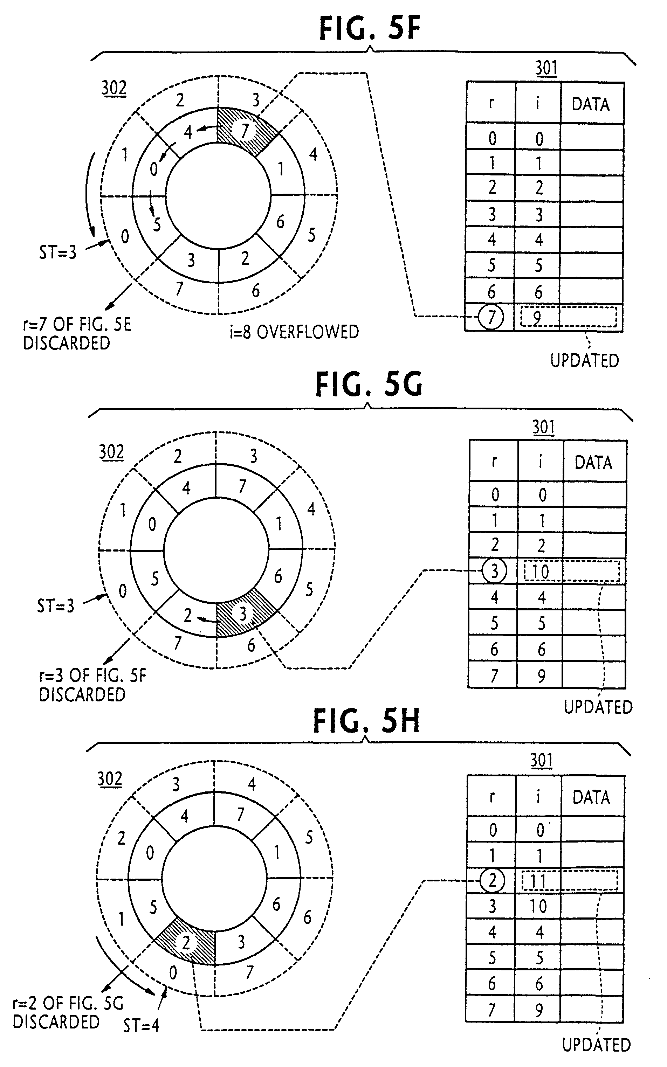

If the value of the subsequent data $C_9$, $G_9$ is smaller than $C_0$, $G_0$, $C_4$, $G_4$, $C_5$, $G_5$ but larger than $C_1$, $G_1$, $C_2$, $G_2$, $C_3$, $G_3$, $C_6$, $G_6$, the index s is incremented to 4 and the index m is set equal to 3 (step 417). Control moves through steps 418, 420 to step 425 to identify the row number r=7 stored in the currently lowest ranking position m=7 of the ring buffer (see Fig. SE). At subsequent step 426, the data $C_7$, $G_7$ and their index i=7 stored in the position of the output buffer corresponding to the identified row number r=7 are updated with the current data $C_9$, $G_9$ and the current index i=9 as indicated by a dotted-line rectangle in Fig. 5F. Control proceeds to step 422 to compare the index m=3 to 8/2. Since m < 8/2, control proceeds through step 427 to step 428 to move the row numbers r=4, r=0, r=5 currently stored in the m=2, m=1 and m=0 positions counterclockwise, so that the position m=2 is vacated. At subsequent step 429, the starting point ST is incremented to 3, shifting the highest ranking position of the ring buffer counterclockwise so that the old m=2 position is now m=3, and at step 424, and is filled with the row number r=7 of the current data. Accordingly, the row number r=7 previously stored in the old m=2 position of the ring buffer is discarded as illustrated in Fig. 5F.

If the value of the subsequent data $C_{10}$, $G_{10}$ falls between the values of $C_6$, $G_6$ and $C_2$, $G_2$, the index s is incremented to 2 and the index m is set equal to 6. The row number r=3 is identified as being the lowest rank (step 425) as it can be seen from Fig. 5F. The current index i=10 and data $C_{10}$, $G_{10}$ are saved in the r=3 position of the output buffer by updating the previous data $C_7$, $G_7$ (step 426). Since m=6 > 8/2 (step 422), the m=6 position of the ring buffer is vacated by moving the row numbers r=2 and r=3 of the m=6 and m=7 positions clockwise, while discarding the row number r=3 as shown in Fig. 5G (step 423). The row number r=3 of the current data is stored in the vacated m=6 position (step 424).

Finally, if the value of the subsequent data $C_{11}$, $G_{11}$ is higher than the value of any of the stored data, the index s is incremented to 8 and the index m is set equal to 0. The row number r=2 is identified as being the lowest rank at step 425 (see Fig. 5G). The current index i=11 and data $C_{11}$, $G_{11}$ are saved in the r=2 position of the output buffer by updating the previous data $C_2$, $G_2$ (step 426). Since m=0, control proceeds through steps 422, 427 to step 429 to increment the indicator ST to 4. The highest ranking position of the ring buffer is shifted to the previously lowest ranking position to create a new m=0 position. At step 424, the row number r=2 is stored in the new m=0 position (see Fig. 5H). Since both of the previous lowest rank data and the current highest data share the same. r=2 row position of the output buffer, the content of the ring buffer at the m=0 position remains unchanged.

With i=11 being equal to L - 1 at step 406, all the calculated data stored in the output buffer are read out according to their rankings using the sequentially read row numbers of the ring buffer at step 408, and converted to corresponding codewords at step 409 and applied to the codebook search controller 106.

It is seen from the foregoing discussion that the storage locations of the data item in the output buffer are controlled not according to their ranks as is done in the prior art, but according to their output buffer address numbers stored in a separate ring buffer. Because of the much smaller amount of data as compared with the data stored in the output buffer, the shifting of address numbers in the ring buffer significantly reduces the computational complexity of VSELP in which the speed of operation is important. In particular, the address numbers stored in the ring buffer are moved clockwise or counterclockwise depending on the rank of new data item relative to the stored data. This bidirectional control serves to further reduce the processor's shifting burden. Accordingly, the amount of time taken to save the necessary data items in the output buffer can be significantly reduced in comparison with the prior art.

Each feature disclosed in this specification (which term includes the claims) and/or shown in the drawings may be incorporated in the invention independently of other disclosed and/or illustrated features.

**Claims**

1. A sorting method, comprising the steps of:

   (a) sequentially storing data items in respective locations of a first memory according to order of arrival and respectively representing the stored data items by first memory indices;
   (b) storing the first memory indices in respective locations of a second memory according to the ranks of the data items relative to each other;
   (c) overwriting a stored data item of lowest rank with an additional data item if the rank of the additional data item is higher than the lowest rank of the stored data items;
   (d) storing the first memory index of the additional data item in one of the locations of the second memory according to the rank of the additional data item relative to the ranks of existing data items in said first memory by moving first memory indices in the second memory and discarding the first memory index of the overwritten data item;
   (e) repeating the steps (c) and (d) a predetermined number of times; and,
   (f) reading stored data items from said first memory according to the arrangement of the first memory indices in said second memory;

   **characterized in that**, in step (b), the locations of said second memory are connected to form a ring, and **in that** step (b) comprises the substeps of:

   (b1) comparing the rank of each of said data items with a threshold value equal to the number of data items stored in the first memory, divided by two;
   (b2) if the rank of the data item is higher than the threshold value, rotating by one position in a first direction on the ring those first memory indices that are stored in said second memory either in a position corresponding to the rank of the data item or to higher ranks, a location corresponding to the rank of the data item being thereby vacated, and storing the first memory index of the data item **in that** vacated location; and,
   (b3) if the rank of the data item is lower than the threshold value, rotating by one position in a second direction on the ring those first memory indices that are stored in the second memory either in a next-lower ranking position to the rank of the data item or in positions ranking lower than the next-lower ranking position, a location corresponding to the next-lower ranking position being thereby vacated, and storing the first memory index of the data item **in that** vacated location.

2. A sorting method as claimed in claim 1, wherein the locations of the second memory are respectively indicated by ranking indicators corresponding to the ranks of the data items in said first memory, wherein the step (b2) comprises moving said ranking indicators in said first direction.

3. A sorting method as claimed in claim 1, wherein the step (d) comprises the steps of:

   (d1) comparing the rank of said additional data item with said threshold value;
   (d2) if the rank of the additional data item is higher than the threshold value, rotating by one position in a first direction on the ring those first memory indices that are stored in said second memory either in a position corresponding to the rank of the data item or to higher ranks, a location corresponding to the rank of the additional data item being thereby vacated, and storing the first memory index of the additional data item in that vacated location; and,

(d3) if the rank of the additional data item is lower than the threshold value, rotating by one position in a second direction on the ring those first memory indices that are stored in the second memory either in a next-lower ranking position to the rank of the additional data item or in positions ranking lower than the next-lower ranking position, a location corresponding to the next-lower ranking position being thereby vacated, and storing the first memory index of the additional data item in that vacated location.

4. A sorting method as claimed in claim 3, wherein the locations of the second memory are respectively indicated by ranking indicators corresponding to the ranks of the data items in said first memory, wherein the step (d2) comprises moving said ranking indicators in said first direction.

5. An apparatus for generating a data sequence, comprising:

a first memory (102) having a plurality of locations respectively indicated by first memory indices;
a second memory (302) having a plurality of locations; and,
control means (300) for sequentially storing data items in the first memory (102) according to order of arrival, storing the first memory indices of the stored data items in the second memory (302) according to the ranks of the data items relative to each other, overwriting a stored data item of lowest rank with an additional data item if the rank of the additional data item is higher than the lowest rank of the stored data items, storing the first memory index of the additional data item in one of the locations of the second memory according to the rank of the additional data item relative to the ranks of existing data items in said first memory by moving first memory indices in the second memory and discarding the first memory index of the overwritten data item, and reading stored data items from said first memory according to the arrangement of the first memory indices in said second memory;

**characterized in that** the plurality of locations of the second memory (302) are connected to form a ring, and **in that** the control means (300) is arranged to:

compare the rank of each of said data items with a threshold value equal to the number of data items stored in said first memory (102), divided by two;
if the rank of the data item is higher than the threshold value, rotate by one position in a first direction on the ring those first memory indices that are stored either in a position corresponding to the rank of the data item or to higher ranks in said second memory (302), a location corresponding to the rank of the data item being thereby vacated, and store the first memory index of the data item **in that** vacated location; and,
if the rank of the data item is lower than the threshold value, rotate by one position in a second direction on the ring those first memory indices that are stored either in a next-lower ranking position in the second memory (302) to the rank of the data item or in positions ranking lower than the next-lower ranking position, a location corresponding to the next-lower ranking position being thereby vacated, and store the first memory index of the data item **in that** vacated location.

6. An apparatus as claimed in claim 5, wherein the locations of the second memory (302) are respectively indicated by ranking indicators corresponding to the ranks of the data items in said first memory (102), wherein the control means (300) is arranged to move said ranking indicators in said first direction.

**Patentansprüche**

1. Sortierverfahren, das die Schritte aufweist:

(a) sequentiell Datenelemente in entsprechenden Stellen eines ersten Speichers entsprechend der Reihenfolge der Ankunft zu speichern und die gespeicherten Datenelemente durch Indizes des ersten Speichers darzustellen;

(b) die Indizes des ersten Speichers an entsprechenden Stellen eines zweiten Speichers gemäß dem Rang der Datenelemente relativ zueinander zu speichern;

(c) ein gespeichertes Datenelement des niedrigsten Rangs mit einem zusätzlichen Datenelement zu überschreiben, wenn der Rang des zusätzlichen Datenelements höher ist als der niedrigste Rang der gespeicherten Datenelemente;

(d) den Index des ersten Speichers des zusätzlichen Datenelements an einer der Stellen des zweiten Speichers gemäß dem Rang des zusätzlichen Datenelements relativ zu den Rängen der existierenden Datenelemente in dem ersten Speicher zu speichern, indem Indizes des ersten Speichers im zweiten Speicher bewegt werden und der Index des ersten Speichers des überschriebenen Datenelementes verworfen wird;

(e) die Schritte (c) und (d) eine vorbestimmte Anzahl von Malen zu wiederholen; und

(f) die gelesenen Datenelemente von dem ersten Speicher gemäß der Anordnung der Indizes des ersten Speichers in dem zweiten Speicher zu lesen;

**dadurch gekennzeichnet, daß** in Schritt (b) die Stellen des zweiten Speichers verbunden sind, um einen Ring zu bilden, und daß Schritt (b) die Unterschritte aufweist:

(b1) den Rang jedes der Datenelemente mit einem Schwellwert zu vergleichen, der gleich der Anzahl von Datenelementen, die im ersten Speicher gespeichert sind, dividiert durch zwei ist;

(b2) wenn der Rang des Datenelements höher ist als der Schwellwert, auf dem Ring in einer ersten Richtung um eine Stelle diejenigen Indizes des ersten Speichers zu rotieren, die in dem zweiten Speicher entweder an einer Stelle, die dem Rang des Datenelementes oder höheren Rängen entspricht, wobei eine Stelle, die dem Rang des Datenelementes entspricht, dadurch freigemacht wird, und den Index des ersten Speichers des Datenelementes in der freigemachten Stelle zu speichern; und

(b3) wenn der Rang des Datenelementes niedriger ist als der Schwellwert, um eine Stelle in einer zweiten Richtung auf dem Ring diejenigen Indizes des ersten Speichers um eine Stelle zu rotieren, die im zweiten Speicher entweder in einer Stelle, die den nächstniedrigeren Rang zum Rang des Datengegenstandes hat, oder in Stellen, die einen niedrigeren Rang haben als die Stelle mit dem nächstniedrigeren Rang zu rotieren, wodurch eine Stelle, die der Stelle mit nächstniedrigerem Rang entspricht, dadurch freigemacht wird, und den Index des ersten Speichers des Datenelements in der freigemachten Stelle zu speichern.

2. Sortierverfahren nach Anspruch 1, bei dem die Stellen des zweiten Speichers durch Ranganzeiger angezeigt werden, die den Rängen der Datenelemente in dem ersten Speicher entsprechen, wobei der Schritt (b2) es aufweist, die
Ranganzeiger in der ersten Richtung zu bewegen.

3. Sortierverfahren nach Anspruch 1, bei dem Schritt (d) die Schritte aufweist:

(d1) den Rang des zusätzlichen Datenelementes mit dem Schwellwert zu vergleichen;

(d2) wenn der Rang des zusätzlichen Datenelementes höher ist als der Schwellwert, in einer ersten Richtung auf dem Ring diejenigen Indizes des ersten Speichers in einer ersten Richtung um eine Stelle zu rotieren, die in dem zweiten Speicher in einer Stelle gespeichert sind, die entweder dem Rang des Datenelementes oder höheren Rängen entspricht, wobei eine Stelle, die dem Rang des zusätzlichen Datenelementes entspricht, dadurch freigemacht wird, und den Index des ersten Speichers des zusätzlichen Datenelementes in der freigemachten Stelle zu speichern; und

(d3) wenn der Rang des zusätzlichen Datenelementes niedriger ist als der Schwellwert, auf dem Ring diejenigen Indizes des ersten Speichers um eine Stelle in einer zweiten Richtung zu rotieren, die im zweiten Speicher entweder in einer Stelle, die den nächstniedrigeren Rang zum Rang des zusätzlichen Datenelementes hat, oder in Stellen gespeichert sind, die einen niedrigeren Rang haben als die Stelle des nächstniedrigeren Rangs, wobei eine Stelle, die der Stelle des nächstniedrigeren Rangs entspricht, dadurch freigemacht wird, und den Index des ersten Speichers des zusätzlichen Datenelementes in der freigemachten Stelle zu speichern.

4. Sortierverfahren nach Anspruch 3, bei dem die Stellen des zweiten Speichers durch Ranganzeiger angezeigt werden, die den Rängen der Datenelemente im ersten Speicher entsprechen, wobei der Schritt (d2) es aufweist, die Ranganzeiger in der ersten Richtung zu bewegen.

**5.** Vorrichtung zum Erzeugen einer Datensequenz, die aufweist:

einen ersten Speicher (102), der eine Mehrzahl von Stellen aufweist, die durch Indizes des ersten Speichers angezeigt werden;

einen zweiten Speicher (302), der eine Mehrzahl von Stellen hat; und

Steuermittel (300) zum sequentiellen Speichern von Datenelementen im ersten Speicher (102) entsprechend der Reihenfolge der Ankunft, zum Speichern der Indizes des ersten Speichers der gespeicherten Datenelemente im zweiten Speicher (302) gemäß den Rängen der Datenelemente relativ zueinander, zum Überschreiben eines gespeicherten Datenelementes des niedrigsten Rangs mit einem zusätzlichen Datenelement, wenn der Rang des zusätzlichen Datenelements höher ist als der niedrigste Rang der gespeicherten Datenelemente, zum Speichern des Index des ersten Speichers des zusätzlichen Datenelementes in einer der Stellen des zweiten Speichers entsprechend dem Rang des zusätzlichen Datenelements relativ zu den Rängen von existierenden Datenelementen in dem ersten Speicher durch Bewegen der Indizes des ersten Speichers im zweiten Speicher und durch Verwerfen des Index des ersten Speichers des überschriebenen Datenelementes, und zum Lesen gespeicherter Datenelemente von dem ersten Speicher gemäß der Anordnung der Indizes des ersten Speichers in dem zweiten Speicher;

**dadurch gekennzeichnet, daß** die Mehrzahl von Stellen des zweiten Speichers (302) zum Bilden eines Rings verbunden ist, und daß die Steuermittel (300) dazu ausgebildet sind:

den Rang jedes der Datenelemente mit einem Schwellwert zu vergleichen, der gleich der Anzahl der im ersten Speicher (102) gespeicherten Datenelemente, dividiert durch zwei, ist;

wenn der Rang des Datenelementes höher ist als der Schwellwert, auf dem Ring in einer ersten Richtung um eine Stelle diejenigen Indizes des ersten Speichers, die an einer Stelle gespeichert sind, die entweder dem Rang des Datenelementes oder höheren Rängen entspricht, in dem zweiten Speicher (302) zu rotieren, wobei eine Stelle, die dem Rang des Datenelementes entspricht, dabei freigemacht wird, und den Index des ersten Speichers des Datenelementes in der freigemachten Stelle zu speichern; und

wenn der Rang des Datenelementes niedriger ist als der Schwellwert, auf dem Ring in einer zweiten Richtung um eine Stelle diejenigen Indizes des ersten Speichers zu rotieren, die entweder in einer Stelle mit nächstniedrigerem Rang zum Rang des Datengegenstands oder an Stellen mit niedrigerem Rang als die Stelle des nächstniedrigerem Rangs im zweiten Speicher (302) gespeichert sind, zu rotieren, wobei eine Stelle, die der nächstniedrigeren Rangstelle entspricht, dadurch freigemacht wird, und den ersten Speicherindex des Datenelements in der freigemachten Stelle zu speichern.

**6.** Vorrichtung nach Anspruch 5, wobei die Stellen des zweiten Speichers (302) durch Ranganzeiger angezeigt sind, die den Rängen der Datenelemente im ersten Speicher (102) entsprechen, wobei die Steuermittel (300) so ausgebildet sind, daß sie die Rangindikatoren in der ersten Richtung bewegen.

**Revendications**

**1.** Procédé de classement, comprenant les étapes consistant :

(a) à mémoriser séquentiellement des éléments de données en des emplacements respectifs d'une première mémoire en fonction de l'ordre d'arrivée, et à représenter respectivement les éléments de données mémorisés par des index de première mémoire ;
(b) à mémoriser les index de première mémoire en des emplacements respectifs d'une seconde mémoire en fonction des rangs des éléments de données les uns par rapport aux autres ;
(c) à remplacer un élément de données mémorisé d'un rang le moins élevé par un élément de données additionnel lorsque le rang de l'élément de données additionnel est plus élevé que le rang le moins élevé de l'élément de données mémorisé ;

(d) à mémoriser l'index de première mémoire de l'élément de données additionnel en un des emplacements de la seconde mémoire en fonction du rang de l'élément de données additionnel par rapport aux rangs des éléments de données existants dans ladite première mémoire en transférant les index de première mémoire dans la seconde mémoire et en rejetant l'index de première mémoire de l'élément de données remplacé ;

(e) à répéter les étapes (c) et (d) un nombre de fois prédéterminé ; et,

(f) à lire les éléments de données mémorisés de ladite première mémoire en fonction de l'agencement des index de première mémoire dans ladite seconde mémoire ;

**caractérisé en ce que**, au cours de l'étape (b), les emplacements de ladite seconde mémoire sont connectés en formant un anneau, et **en ce que** l'étape (b) comprend les sous-étapes consistant :

(b1) à comparer le rang de chacun desdits éléments de données à une valeur de seuil égale au nombre d'éléments de données mémorisés dans la première mémoire divisé par deux ;

(b2) lorsque le rang de l'élément de données est plus élevé que la valeur de seuil, à faire tourner d'une position dans un premier sens sur l'anneau ces index de première mémoire qui sont mémorisés dans ladite seconde mémoire, soit en une position correspondant au rang de l'élément de données, soit à des rangs plus élevés, un emplacement correspondant au rang de l'élément de données étant ainsi libéré, et à mémoriser l'index de première mémoire de l'élément de données en cet emplacement libéré ; et,

(b3) lorsque le rang de l'élément de données est moins élevé que la valeur de seuil, à faire tourner d'une position dans un second sens sur l'anneau ces index de première mémoire qui sont mémorisés dans la seconde mémoire, soit en une position d'un rang immédiatement moins élevé que le rang de l'élément de données, soit en des positions d'un rang moins élevé que la position d'un rang immédiatement moins élevé, un emplacement correspondant à la position d'un rang immédiatement moins élevé étant ainsi libéré, et à mémoriser l'index de première mémoire de l'élément de données en cet emplacement libéré.

2. Procédé de classement selon la revendication 1, dans lequel les emplacements de la seconde mémoire sont respectivement indiqués par des indicateurs de rang correspondant aux rangs des éléments de données dans ladite première mémoire, dans lequel l'étape (b2) comprend le transfert desdits indicateurs de rang dans ledit premier sens.

3. Procédé de classement selon la revendication 1, dans lequel l'étape (d) comprend les étapes consistant:

(d1) à comparer le rang dudit élément de données additionnel à ladite valeur de seuil ;

(d2) lorsque le rang de l'élément de données additionnel est plus élevé que la valeur de seuil, à faire tourner d'une position dans un premier sens sur l'anneau ces index de première mémoire qui sont mémorisés dans ladite seconde mémoire, soit en une position correspondant au rang de l'élément de données, soit à des rangs plus élevés, un emplacement correspondant au rang de l'élément de données additionnel étant ainsi libéré, et à mémoriser l'index de première mémoire de l'élément de données additionnel en cet emplacement libéré ; et,

(d3) lorsque le rang de l'élément de données additionnel est moins élevé que la valeur de seuil, à faire tourner d'une position dans un second sens sur l'anneau ces index de première mémoire qui sont mémorisés dans la seconde mémoire, soit en une position d'un rang immédiatement moins élevé que le rang de l'élément de données additionnel, soit en des positions d'un rang moins élevé que la position d'un rang immédiatement moins élevé, un emplacement correspondant à la position d'un rang immédiatement moins élevé étant ainsi libéré, et à mémoriser l'index de première mémoire de l'élément de données additionnel en cet emplacement libéré.

4. Procédé de classement selon la revendication 3, dans lequel les emplacements de la seconde mémoire sont respectivement indiqués par des indicateurs de rang correspondant aux rangs des éléments de données dans ladite première mémoire, dans lequel l'étape (d2) comprend le transfert des indicateurs de rang dans ledit premier sens.

5. Dispositif pour générer une séquence de données, comprenant :

une première mémoire (102) comportant une pluralité d'emplacements respectivement indiqués par des index de première mémoire ;

une seconde mémoire (302) comportant une pluralité d'emplacements ; et,

des moyens de commande (300) pour mémoriser séquentiellement des éléments de données dans la première mémoire en fonction de l'ordre d'arrivée, mémoriser les index de première mémoire des éléments de données mémorisés dans la seconde mémoire (302) en fonction des rangs des éléments de données les uns par rapport aux autres, remplacer un élément de données mémorisé d'un rang le moins élevé par un élément de données additionnel lorsque le rang de l'élément de données additionnel est plus élevé que le rang le moins élevé de l'élément de données mémorisé, mémoriser l'index de première mémoire de l'élément de données additionnel en un des emplacements de la seconde mémoire en fonction du rang de l'élément de données additionnel par rapport aux rangs des éléments de données existants dans ladite première mémoire en transférant les index de première mémoire dans la seconde mémoire et en rejetant l'index de première mémoire de l'élément de données remplacé, et lire les éléments de données mémorisés de ladite première mémoire en fonction de l'agencement des index de première mémoire dans ladite seconde mémoire ;

**caractérisé en ce que** la pluralité d'emplacements de la seconde mémoire (302) sont connectés en formant un anneau, et **en ce que** les moyens de commande (300) sont agencés pour :

comparer le rang de chacun desdits éléments de données à une valeur de seuil égale au nombre d'éléments de données mémorisés dans ladite première mémoire (102) divisé par deux ;
lorsque le rang de l'élément de données est plus élevé que la valeur de seuil, faire tourner d'une position dans un premier sens sur l'anneau ces index de première mémoire qui sont mémorisés, soit en une position correspondant au rang de l'élément de données, soit à des rangs plus élevés, dans ladite seconde mémoire (302), un emplacement correspondant au rang de l'élément de données étant ainsi libéré, et mémoriser l'index de première mémoire de l'élément de données en cet emplacement libéré ; et,
lorsque le rang de l'élément de données est moins élevé que la valeur de seuil, faire tourner d'une position dans un second sens sur l'anneau ces index de première mémoire qui sont mémorisés, soit en une position d'un rang immédiatement moins élevé dans la seconde mémoire (302) que le rang de l'élément de données, soit en des positions d'un rang moins élevé que la position d'un rang immédiatement moins élevé, un emplacement correspondant à la position d'un rang immédiatement moins élevé étant ainsi libéré, et mémoriser l'index de première mémoire de l'élément de donéées en cet emplacement libéré.

6. Dispositif selon la revendication 5, dans lequel les emplacements de la seconde mémoire (302) sont respectivement indiqués par des indicateurs de rang correspondant aux rangs des éléments de données dans ladite première mémoire (102), dans lequel les moyens de commande (300) sont agencés pour transférer lesdits indicateurs de rang dans ledit premier sens.

# FIG. 1 PRIOR ART

# FIG. 2
# PRIOR ART

START

i = 0, m = 0 — 200

FETCH DATA $f_i(n)$ FROM ROW i OF INPUT BUFFER — 201

COMPUTE $C_i$, $G_i$ — 202

i = 0 ? — 203
YES →

i = i + 1 — 205

SAVE $C_i$, $G_i$ INTO ROW m OF OUTPUT BUFFER — 204

A

NO ↓

FETCH DATA $C_m$, $G_m$ FROM OUTPUT BUFFER — 206

$C_i^2 G_m > C_m^2 G_i$ — 207
YES →

NO ↓

m = N − 1 ? — 208
YES →

VACATE THE m-TH ROW POSTION OF OUTPUT BUFFER BY MOVING LOWER RANKING DATA AND SAVE VECTOR $C_i$, $G_i$ IN THE VACATED ROW POSITION — 211

NO ↓

m = m + 1 — 209

m = i ? — 210
NO →

YES ↓

A

i = L − 1 ? — 212
NO →

YES ↓

CONVERT OUTPUT DATA TO CORRESPONDING CODEWORDS AND SUPPLY THE CODEWORDS TO CODEBOOK SEARCH CONTROLLER — 213

STOP

# FIG. 3

EP 0 645 697 B1

# FIG. 4A

START

400 — $i = 0$, $m = 0$, $ST = 0$

401 — FETCH DATA $f_i(n)$ FROM INPUT BUFFER

402 — COMPUTE $C_i$, $G_i$

403 — $i = 0$ ?

— YES → (to 404)
— NO → (to 410)

404 — SAVE DATA $C_i$, $G_i$ AND INDEX $i$ INTO THE $i$-TH ROW OF OUTPUT BUFFER

405 — SAVE ROW NUMBER $r$ OF OUTPUT BUFFER INTO A POSITION OF RING BUFFER WHICH IS DISPLACED $m$ POSITIONS FROM THAT SPECIFIED BY ST

406 — $i = L - 1$ ?

— NO → 407 — $i = i + 1$
— YES → (to 408)

408 — SEQUENTIALLY READ DATA FROM RING BUFFER AND USE THEM AS ADDRESS POINTERS FOR READING DATA FROM OUTPUT BUFFER

409 — CONVERT READ DATA TO CODEWORDS AND SUPPLY THE CODEWORDS TO CODEBOOK SEARCH CONTROLLER

STOP

410 — $j = 0$, $s = 0$

411 — FETCH DATA $C_j$, $G_j$ FROM OUTPUT BUFFER

412 — $C_i^2 G_j > C_j^2 G_i$ ?

— YES → 413 — $s = s + 1$
— NO → (to 414)

414 — $j = N - 1$ ?

— NO → 415 — $j = j + 1$
— YES → (to 417)

416 — $j = i$ ?

— NO → (loop)
— YES → (to 417)

417 — $m = i - s$ (IF $i < N - 1$)
$m = N - 1 - s$ (IF $i \geq N - 1$)

418 — $m = $ LOWEST RANK ?

— NO → (A)
— YES → (to 419)

419 — OUTPUT BUFFER FULL ?

— NO → (loop)
— YES → (B)

17

# FIG. 4B

(A)

420

OUTPUT BUFFER FULL ?

YES →

NO ↓

425

IDENTIFY THE ROW NUMBER STORED IN LOWEST RANK POSITION OF RING BUFFER

421

SAVE DATA $C_i$, $G_i$ AND INDEX i INTO THE i-TH ROW OF OUTPUT BUFFER

426

UPDATE DATA AND INDEX STORED IN A POSITION OF OUTPUT BUFFER CORRESPONDING TO THE IDENTIFIED ROW NUMBER WITH CURRENT DATA AND CURRENT INDEX i

422

m ≥ FILLED ROW COUNT/2 ?

NO →

YES ↓

427

m = HIGHEST RANK (0) ?

YES →

NO ↓

423

VACATE THE m-TH POSITION OF RING BUFFER BY MOVING THE ROW NUMBER(S) STORED IN m-TH AND LOWER RANKING POSITION(S) CLOCKWISE BY ONE POSITION FROM THAT SPECIFIED BY ST

428

VACATE THE (m–1)TH POSITION OF RING BUFFER BY MOVING THE ROW NUMBER(S) STORED IN (m–1)-TH AND HIGHER RANKING POSITION(S) COUNTERCLOCKWISE BY ONE POSITION FROM THAT SPECIFIED BY ST

429

ST = ST + 1

424

STORE ROW NUMBER OF OUTPUT BUFFER POSITION WHERE $C_i$, $G_i$ ARE SAVED INTO THE m-th POSITION OF RING BUFFER

(B)

# FIG. 5A

| r | i | DATA |
|---|---|------|
| 0 | 0 | |
| 1 | 1 | |
| 2 | 2 | |
| 3 | 3 | |
| 4 | | |
| 5 | | |
| 6 | | |
| 7 | | |

# FIG. 5B

| r | i | DATA |
|---|---|------|
| 0 | 0 | |
| 1 | 1 | |
| 2 | 2 | |
| 3 | 3 | |
| 4 | 4 | |
| 5 | | |
| 6 | | |
| 7 | | |

# FIG. 5C

| r | i | DATA |
|---|---|------|
| 0 | 0 | |
| 1 | 1 | |
| 2 | 2 | |
| 3 | 3 | |
| 4 | 4 | |
| 5 | 5 | |
| 6 | | |
| 7 | | |

# FIG. 5D

| r | i | DATA |
|---|---|---|
| 0 | 0 | |
| 1 | 1 | |
| 2 | 2 | |
| 3 | 3 | |
| 4 | 4 | |
| 5 | 5 | |
| ⑥ | 6 | |
| 7 | | |

# FIG. 5E

| r | i | DATA |
|---|---|---|
| 0 | 0 | |
| 1 | 1 | |
| 2 | 2 | |
| 3 | 3 | |
| 4 | 4 | |
| 5 | 5 | |
| 6 | 6 | |
| ⑦ | 7 | |

# FIG. 5F

302

ST=3

r=7 OF FIG. 5E
DISCARDED

i=8 OVERFLOWED

301

| r | i | DATA |
|---|---|------|
| 0 | 0 | |
| 1 | 1 | |
| 2 | 2 | |
| 3 | 3 | |
| 4 | 4 | |
| 5 | 5 | |
| 6 | 6 | |
| ⑦ | 9 | |

UPDATED

# FIG. 5G

302

ST=3

r=3 OF FIG. 5F
DISCARDED

301

| r | i | DATA |
|---|---|------|
| 0 | 0 | |
| 1 | 1 | |
| 2 | 2 | |
| ③ | 10 | |
| 4 | 4 | |
| 5 | 5 | |
| 6 | 6 | |
| 7 | 9 | |

UPDATED

# FIG. 5H

302

r=2 OF FIG. 5G
DISCARDED    ST=4

301

| r | i | DATA |
|---|---|------|
| 0 | 0 | |
| 1 | 1 | |
| ② | 11 | |
| 3 | 10 | |
| 4 | 4 | |
| 5 | 5 | |
| 6 | 6 | |
| 7 | 9 | |

UPDATED